# EUROPEAN PATENT SPECIFICATION

(11) **EP 4 446 185 B1**
(45) Date of publication and mention of the grant of the patent: **15.10.2025**
(21) Application number: 24158290.7
(22) Date of filing: 19.02.2024
(51) Int. Cl.: B60W 30/095, B60W 50/14

(54) **VEHICULAR DRIVING SUPPORT APPARATUS**
FAHRZEUGFAHRUNTERSTÜTZUNGSVORRICHTUNG
APPAREIL DE SUPPORT DE CONDUITE DE VÉHICULE

(30) Priority: 12.04.2023 JP 2023065036
(43) Date of publication of application: 16.10.2024
(73) Proprietor: Suzuki Motor Corporation, Shizuoka 432-8611 (JP)
(72) Inventor: AOSHIMA, Hidemichi, HAMAMATSU-SHI, 432-8611 (JP)
(74) Representative: Plasseraud IP

(56) References cited:
- EP-A1- 3 539 837
- DE-A1- 102020 109 542
- DE-A1- 102021 200 467
- US-A1- 2017 154 226
- US-A1- 2020 391 591

## Description

### BACKGROUND OF THE INVENTION

### Field of the Invention

The present invention relates to a vehicular driving support apparatus (i.e., driving support apparatus for a vehicle).

### Description of the Related Art

In a known vehicular technique, when another vehicle traveling in front of the own vehicle (hereinafter sometimes referred to as the "preceding vehicle") is detected and the own vehicle has a possibility of colliding with the preceding vehicle, a warning is issued to make the driver aware of this possibility. Patent Document 2 describes an example of a vehicle and a control method for detecting a driver's gaze and warning of a collision risk. Patent Document 3 describes an example of a driver assistance system for a motor vehicle having an environment camera for generating image data.

[Patent Document 1] JP 2014-178971 A
[Patent Document 2] US 2020/391591 A1
[Patent Document 3] US 2017/154226 A1

Under such a situation where the own vehicle has the possibility of colliding with the preceding vehicle, if the driver is diverting attention from the front of the own vehicle (hereinafter sometimes abbreviated as "the front") and the warning is issued at a normal timing without taking such situation into consideration, there is a concern that a sufficient time for the driver to take a necessary evacuation action such as applying the brake may not be secured after the driver notices the possibility of the collision through the warning.

Conversely, if the timing to issue the warning is uniformly set earlier under the assumption that the driver may not be paying attention to the front, the warning may be issued at an unnecessarily early timing for the driver who is alert to the front and aware of the possibility of the collision with the preceding vehicle, which may resultantly inconvenience the driver.

### SUMMARY OF THE INVENTION

In view of the above-described circumstances, an object of the present invention is to provide a vehicular driving support apparatus that can appropriately issue a warning depending on the state of the driver without unnecessarily or excessively inconveniencing the driver.

In one aspect of the present invention, a vehicular driving support apparatus is proposed according to claim 1.

The object may be a preceding vehicle that travels in front of the own vehicle. The vehicular driving support apparatus may further include a preceding-vehicle deceleration determination unit configured to determine whether there is a possibility of deceleration of the preceding vehicle. In this case, the warning execution unit may differentiate the timing to issue the warning depending on whether there is a possibility of deceleration of the preceding vehicle or not. The timing to issue the warning in at least one of the first mode or the second mode may be set at an earlier timing when there is the possibility of deceleration of the preceding vehicle than in a case where the possibility of deceleration is denied.

The preceding-vehicle deceleration determination unit may determine whether there is the possibility of deceleration of the preceding vehicle or not, based on a predetermined determination parameter. The determination parameter may include at least one of an operating status of a hazard lamp of the preceding vehicle, a traveling state of a pre-preceding vehicle that travels in front of the preceding vehicle, or an inter-vehicular distance between the preceding vehicle and the pre-preceding vehicle.

The vehicular driving support apparatus may further include a preceding-vehicle interruption determination unit configured to determine whether detection of the preceding vehicle by the obstacle detection unit is due to interruption by the preceding vehicle or not. In this case, the preceding-vehicle deceleration determination unit is preferably configured to determine whether there is the possibility of deceleration of the preceding vehicle or not, based on the determination parameter except the operating status of the hazard lamp for the preceding vehicle detected due to the interruption.

When a relative vehicle speed of the own vehicle with respect to the preceding vehicle becomes low after the warning execution unit issues the warning at an earlier timing than in a case of no possibility of deceleration of the preceding vehicle under an affirmed possibility of the deceleration, the warning execution unit may stop the warning in response to determination by the driver monitoring unit that the driver is paying attention to the front. Additionally or alternatively, when the relative vehicle speed becomes high after the warning execution unit issues the warning at an earlier timing than in a case of no possibility of the deceleration under the affirmed possibility of the deceleration, the warning execution unit may stop the warning in response to a predetermined warning stop operation by the driver.

The preceding-vehicle deceleration determination unit may determine the possibility of deceleration of the preceding vehicle based on the operating status of the hazard lamp of the preceding vehicle, and the warning execution unit may issue the warning at an earlier timing when there is the possibility of deceleration of the preceding vehicle than in a case where there is no possibility of deceleration. In this case, the warning execution unit may issue the warning at an earlier timing than in a case of no possibility of deceleration according to a determination that there is the possibility of deceleration of the preceding vehicle, which is made by using the operating status of the hazard lamp of the preceding vehicle, and then stop the warning in response to operation on the hazard lamp of the own vehicle.

The driver monitoring unit may determine the attention state of the driver based on a driver's line of sight.

### EFFECTS OF THE INVENTION

According to one aspect of the present invention, when an obstacle in front of the own vehicle is detected and there is a possibility of collision with the obstacle, a warning is issued to the driver for notifying the driver of the possibility of the collision. This warning is issued in different modes depending on the attention state of the driver to the front. The first mode is used if the driver is paying attention to the front, and the second mode is used if the driver is not paying attention to the front. The second mode is a warning operation mode that prompts the driver to recognize the possibility of collision earlier than the first mode. Since the warning can be issued depending on the state of the driver in this manner, a situation of unnecessarily or excessively inconveniencing the driver can be avoided.

### BRIEF DESCRIPTION OF THE DRAWINGS

In the accompanying drawings:
Fig. 1 is a schematic diagram illustrating an overall configuration of a vehicular driving support apparatus according to one embodiment of the present invention;
Fig. 2 is a schematic diagram illustrating the internal structure of the driving support apparatus;
Fig. 3 is a flowchart illustrating the basic flow of collision warning control to be executed by the driving support apparatus;
Fig. 4 is a flowchart illustrating details of preceding-vehicle deceleration determination processing (in the step S104) in the collision warning control;
Fig. 5 is a timing chart illustrating the warning timing to be set by the collision warning control;
Fig. 6 is a flowchart illustrating details of part of the collision warning control (i.e., third warning-timing setting processing) according to another embodiment of the present invention;
Fig. 7 is a flowchart illustrating details of part of the collision warning control (i.e., fourth warning-timing setting processing) according to still another embodiment of the present invention; and
Fig. 8 is a flowchart illustrating details of part of the collision warning control (i.e., warning stop processing) according to still another embodiment of the present invention.

### DETAILED DESCRIPTION

Hereinbelow, embodiments of the present invention will be described by referring to the accompanying drawings.

### (Configuration of Driving Support Apparatus)

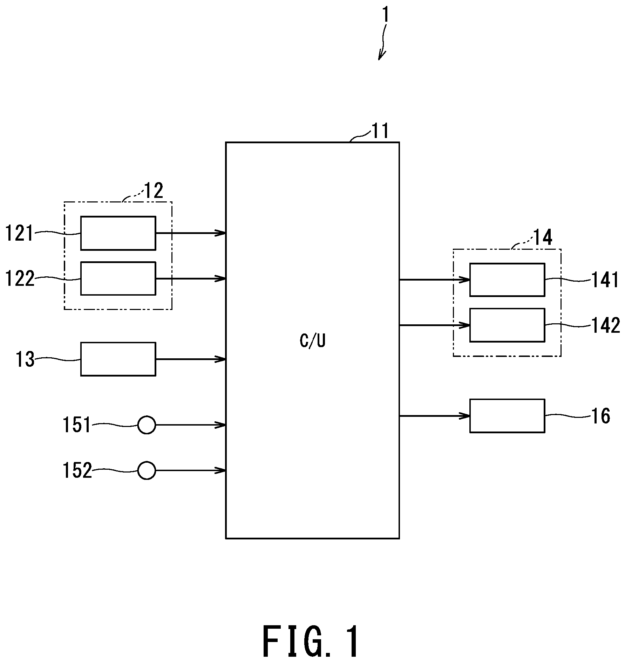

Fig. 1 is a schematic diagram illustrating a configuration of a vehicular driving support apparatus 1 according to one embodiment of the present invention.

The vehicular driving support apparatus 1 includes a controller 11, an external sensor 12, an in-vehicle sensor 13, an instrument panel 14, and various other sensors and instruments as the main components related to the present embodiment.

The controller 11 constitutes a calculation unit of the driving support apparatus 1, and generates and outputs a command signal that reflects the calculation result.

The external sensor 12 constitutes a detection unit of the driving support apparatus 1 in combination with the in-vehicle sensor 13 described below, monitors the surroundings of the own vehicle, and acquires information on the surrounding environment or situation. The external sensor 12 includes an external front monitoring camera 121 (hereinafter referred to as "the front camera 121") and a front millimeter-wave radar 122 as sensors for forward monitoring.

The field of view of the front camera 121 is set to the front of the own vehicle. The front camera 121 analyzes the generated images so as to detect pedestrians and obstacles in front of the own vehicle, for example. In the following description, "obstacles" include road obstacles installed on the road as well as other vehicles except the own vehicle. For distinction from the so-called road obstacles, an obstacle that moves autonomously, such as another vehicle, is sometimes referred to as a "moving obstacle".

The front millimeter-wave radar 122 emits radio waves of millimeter wavelength toward the front of the own vehicle and receives radio waves reflected by obstacles and/or other objects so as to determine vehicle parameters, such as the distance from the own vehicle to the obstacle and the relative speed of the own vehicle with respect to the obstacle, for example. In the present embodiment, the front camera 121 and the front millimeter-wave radar 122 detect another vehicle traveling in the same lane ahead of the own vehicle (hereinafter sometimes referred to as "the preceding vehicle"). If the preceding vehicle exists, the detection result is used for calculating parameters such as the inter-vehicular distance from the own vehicle to the preceding vehicle, the relative speed of the own vehicle with respect to the preceding vehicle, and the predicted collision time until the own vehicle collides with the preceding vehicle.

The in-vehicle camera 13 is a sensor for monitoring the inside of the vehicle. In the present embodiment, the driver is the imaging target and the driver's line of sight is detected.

The respective detection signals of the external sensor 12 and the in-vehicle camera 13 are inputted to the controller 11. Analysis of the images generated by the in-vehicle camera 13 enables both detection of the direction in which the driver's line of sight is directed and detection of the movement of the driver's line of sight, and further enables determination as to the attention state of the driver to the front of the own vehicle. Specifically, whether the driver is paying attention to the front of the own vehicle can be determined. In the present embodiment, if the driver's line of sight is directed forward, it is determined that the driver is paying attention to the front (specifically, to the preceding vehicle ahead). On the basis of the direction in which the driver's line of sight is directed, the configuration of the present embodiment can determine whether the direction of the driver's attention is simply forward or not, and can also distinguish between the preceding vehicle and other obstacles such as a signboard installed on the side of the road so as to determine whether the direction of the attention or the line of sight is toward the preceding vehicle or not.

The instrument panel 14 displays an indicator for making the driver aware of the situation and alerting the driver as well as another indicator for requesting the driver to respond to the situation. The instrument panel 14 includes a warning light 141 and an alarm 142 in addition to various meters and indicator lights. The meters display the driving status of the vehicle, such as vehicle speed. The indicator lights display the operating status of various control functions such as traction control and vehicle stability control, and also display the operating status of various devices such as an immobilizer. The warning light 141 displays various warnings to the driver, such as low fuel level and non-use of the seatbelt. The indicator light 141 is installed at a position where the driver can see it during driving, such as on the dashboard of the driver's seat, together with the meters and the indicator lights. The alarm 142 works in conjunction with the warning light 141 and provides audible information to help the driver recognize the warning.

The instrument panel 14 further constitutes an output unit of the driving support apparatus 1. The warning light 141 and the alarm 142 display a warning regarding the control to be performed by the driving support apparatus 1, and notify the driver of it. Specifically, the warning light 141 displays a collision warning when the own vehicle has a possibility of colliding with the preceding vehicle, for example. The alarm 142 works in conjunction with the warning light 141 so as to notify the driver of the possibility of collision between the own vehicle and the preceding vehicle by using audible information such as a buzzer.

In addition to the above-described components, an accelerator sensor 151 and a brake sensor 152 are provided as other sensors related to the driving support control, and a brake actuator 16 is provided as an actuator. The accelerator sensor 151 detects operation amount of an accelerator pedal depressed by the driver. The brake sensor 152 detects operation amount of a brake pedal depressed by the driver. The brake actuator 16 constitutes a drive source of a brake system, and generates and adjusts braking force to be applied to the wheels of the vehicle. The brake actuator 16 can be configured by using a hydraulic actuator and can also be configured as a regenerative braking actuator by using a power generator or an electric motor capable of generating electricity, for example.

### (Configuration of Controller)

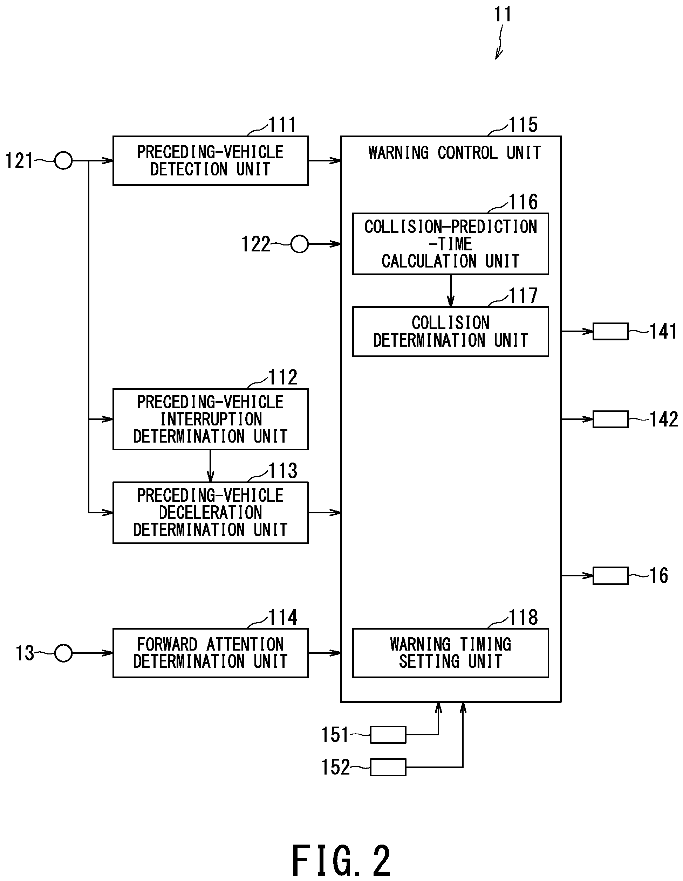

Fig. 2 is a schematic diagram illustrating the internal structure of the driving support apparatus 1.

In the present embodiment, the controller 11 detects another vehicle (i.e., preceding vehicle) traveling in front of the own vehicle. If there is a possibility that the own vehicle collides with the preceding vehicle as the detection result, the controller 11 issues the warning to make the driver aware of this possibility.

A preceding-vehicle detection unit 111 detects the preceding vehicle traveling in front of the own vehicle on the basis of the output information from the front camera 121.

A preceding-vehicle interruption determination unit 112 determines whether the detection of the preceding vehicle by the preceding-vehicle detection unit 111 is attributable to the preceding vehicle cutting in front of the own vehicle. This determination can be made by checking the movement of the preceding vehicle from time-sequential images generated by the front camera 121, and can also be made on the basis of whether the driver has an intention to accept interruption of the preceding vehicle or not. Whether the driver has the intention to accept the interruption can be determined by detecting whether the driver has applied the brake to create an entry space for the preceding vehicle in front of the own vehicle or not, for example.

A preceding-vehicle deceleration determination unit 113 determines whether the preceding vehicle is likely or unlikely to decelerate, i.e., whether there is a possibility of deceleration of the preceding vehicle or not. In the present embodiment, this determination is made on the basis of the operating status of the hazard lamp(s) of the preceding vehicle. Specifically, when the hazard lamps of the preceding vehicle flash (i.e., blink), it is determined that there is a possibility that the preceding vehicle may decelerate. However, under the situation where the detection of the preceding vehicle is ascribable to interruption by the preceding vehicle, even if the hazard lamps of the preceding vehicle are flashing, the preceding-vehicle deceleration determination unit 113 does not use this flashing as the direct reason for determining that there is a possibility of deceleration of the preceding vehicle. This is to avoid erroneously affirming the possibility of deceleration when the flashing of the hazard lamps is a so-called "thank-you hazard". The "thank-you hazard" means flashing the hazard lamps several times to express gratitude to another vehicle for giving way at the time of merging and/or changing the driving lane, for example.

The interruption of the preceding vehicle can be determined on the basis of the output information from the front camera 121, and can also be determined by the fact that the hazard lamps turn off after flashing for a short period of time, such as after a few flashes. The operating status of the hazard lamps in the preceding vehicle is one of "determination parameters" in the present embodiment, and serves as an index for determining whether there is a possibility of deceleration of the preceding vehicle or not.

The determination parameters are not limited to flashing of the hazard lamps. For example, when there is another vehicle traveling further ahead of the preceding vehicle (hereinafter referred to as the "pre-preceding vehicle" or "the next preceding vehicle"), the traveling state of the pre-preceding vehicle or the inter-vehicular distance between the preceding vehicle and the pre-preceding vehicle can be used as the determination parameter. For example, in the case where the pre-preceding vehicle is decelerating or in the case where the pre-preceding vehicle is traveling at a relatively low speed with respect to the preceding vehicle, these cases can be determined that the preceding vehicle has a possibility of deceleration. Furthermore, if the inter-vehicular distance between the preceding vehicle and the pre-preceding vehicle is short, it can be determined that the preceding vehicle has a possibility of deceleration. The traveling state of the pre-preceding vehicle and the inter-vehicular distance between the pre-preceding vehicle and the pre-preceding vehicle can be detected on the basis of the output information from the front millimeter-wave radar 122.

The forward attention determination unit 114 determines the attention state of the driver to the front of the own vehicle. As described above, on the basis of the output information from the in-vehicle camera 13, the forward attention determination unit 114 detects the direction of the driver's line of sight and the movement of the driver's line of sight. If the driver's line of sight is directed toward the front of the own vehicle, it is determined that the driver is paying attention to the front. If the driver's line of sight is away from the front of the own vehicle, it is determined that the driver is not paying attention to the front. The possible reasons why the driver's line of sight deviates from the front include: looking aside during driving, sleepiness of the driver, and distractedness of the driver.

In the present embodiment, the warning control unit 115 includes a collision-prediction-time calculation unit 116, a collision determination unit 117, and a warning timing setting unit 118. The relationship between these components is not limited to the above-described aspect, and these components may be in any appropriate relationship. For example, the collision-prediction-time calculation unit 116, the collision determination unit 117, and the warning timing setting unit 118 may be interpreted as ancillary components of the warning control unit 115 in the relationship shown in Fig. 2 or may be interpreted as components in parallel relationship with respect to the warning control unit 115.

The collision-prediction-time calculation unit 116 calculates a collision prediction time Tcol. The collision prediction time Tcol is the margin time length until the own vehicle collides with the preceding vehicle, and can be calculated on the basis of vehicle parameters such as the inter-vehicular distance between the preceding vehicle and the own vehicle and the relative vehicle speed of the own vehicle with respect to the preceding vehicle.

The collision determination unit 117 determines whether there is a possibility of collision between the own vehicle and the preceding vehicle. This determination can be readily made by comparing the collision prediction time Tcol calculated above with a preset threshold. Specifically, the collision determination unit 117 stores a map in which respective thresholds for various collision prediction times are assigned in association with parameter values such as a vehicle speed of the own vehicle, for example. If the current collision prediction time Tcol is equal to or shorter than the threshold value that is calculated from this map on the basis of parameter values such as a relative vehicle speed, it is determined that there is a possibility of collision. If the current collision prediction time Tcol is longer than the threshold value, it is determined that there is no possibility of collision.

In addition to the above-described method, the determination as to whether there is a possibility of collision can also be made from the viewpoint of whether the own vehicle can be decelerated to the speed same as the preceding vehicle within the collision prediction time Tcol or not. For example, on the basis of the current relative speed of the own vehicle with respect to the preceding vehicle, the collision determination unit 117 calculates the time required for the own vehicle to reduce its running speed to the speed of the preceding vehicle, i.e., the time required to reduce the relative speed of the own vehicle to zero (hereinafter referred to as "braking time"), and then determines whether the braking time is shorter than the collision prediction time Tcol or not. If the braking time is shorter than the collision prediction time Tcol, it is determined that there is no possibility of collision. If the braking time is equal to or longer than the collision prediction time Tcol, it is determined that there is a possibility of collision.

The warning timing setting unit 118 receives the determination result from the forward attention determination unit 114, and sets the timing to issue the warning (hereinafter referred to as the "warning timing") depending on the determination result. In the present embodiment, if the driver is paying attention to the front, the warning timing is set to a relatively late timing T1 (hereinafter referred to as "the first warning timing T1"). If the driver is not paying attention to the front, the warning timing is set to T2 (hereinafter referred to as "the second warning timing") which is earlier than the first warning timing T1. The first warning timing T1 is the warning timing in the case of issuing the warning in the first mode, and the second warning timing T2 is the warning timing in the case of issuing the warning in the second mode.

Furthermore, the warning timing setting unit 118 receives the determination result from the preceding-vehicle deceleration determination unit 113, and changes or differentiates the timing to issue the warning depending on the determination result. In the present embodiment, when there is a possibility of deceleration of the preceding vehicle, the warning timing in the first mode (i.e., the warning timing under the situation where the driver is paying attention to the front) is changed to T3 (hereinafter referred to as "the third warning timing T3"), which is earlier than the warning timing in the case of no possibility of deceleration. Further, the warning timing in the second mode (i.e., the warning timing under the situation where the driver is not paying attention to the front) is changed to T4 (hereinafter referred to as "the fourth warning timing T4"), which is earlier than the warning timing in the case of no possibility of deceleration.

When there is a possibility of collision between the own vehicle and the preceding vehicle, the warning control unit 115 issues the warning to make the driver aware of the possibility. Specifically, after the collision determination unit 117 determines that there is a possibility of collision, the warning is issued at the first warning timing T1, the second warning timing T2, the third warning timing T3, or the fourth warning timing T4. The warning may be achieved by providing visual information or by providing auditory information. In the present embodiment, a visual warning is issued by the warning light 141, and the alarm 142 issues an audible warning.

### (Contents of Collision Warning Control)

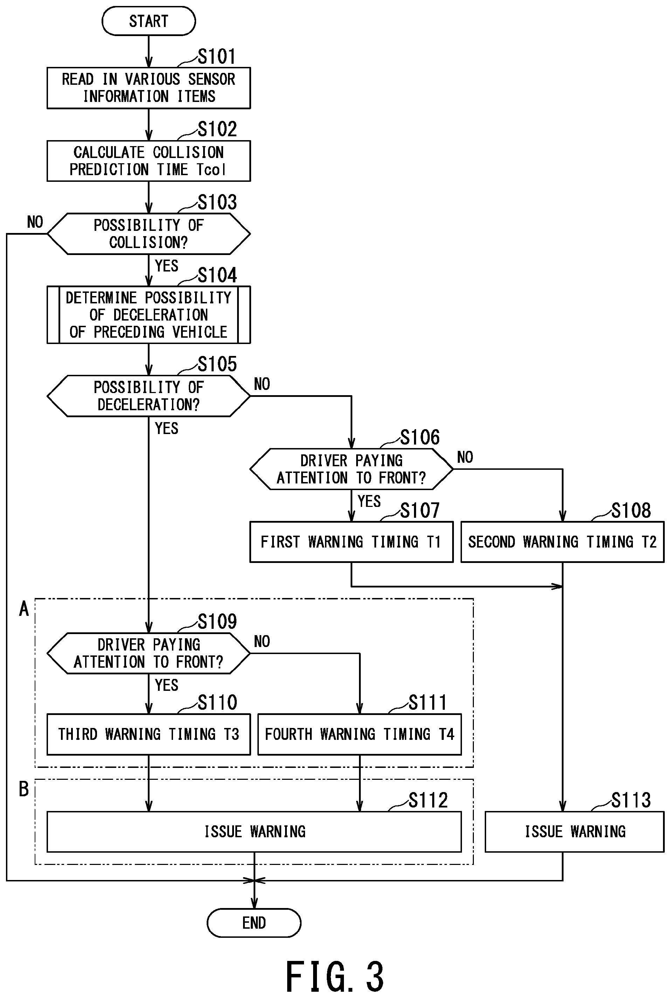

Fig. 3 is a flowchart illustrating the basic flow of the collision warning control according to the present embodiment. The controller 101 repeatedly executes the control of the routine shown in Fig. 3 at predetermined intervals.

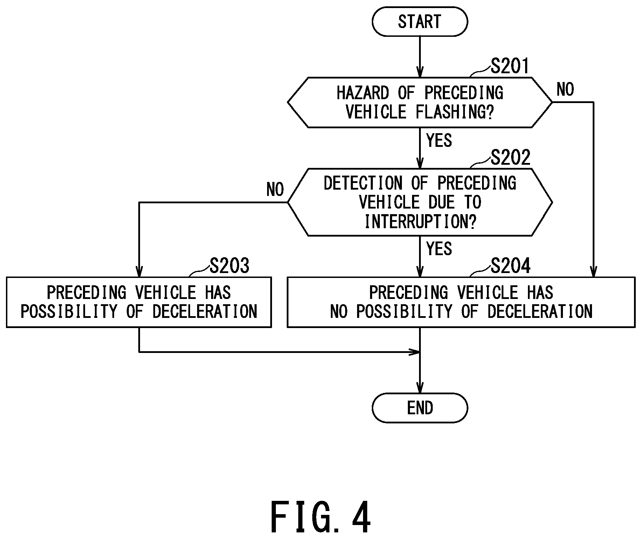

Fig. 4 is a flowchart illustrating details of preceding-vehicle deceleration determination processing (in the step S104 of Fig. 3) in the collision warning control according to the present embodiment.

In the flowchart of Fig. 3, in the step S101, the output information items from various sensors such as the external sensor 12 are read in.

In the step S102, the collision prediction time Tcol is calculated.

In the step S103, it is determined whether there is a possibility of collision between the own vehicle and the preceding vehicle or not. If there is a possibility of collision, the processing proceeds to the step S104. If there is no possibility of collision, the current control is completed.

In the step S104, it is determined whether there is a possibility of deceleration of the preceding vehicle or not.

In the step S105, after receiving the determination result in the step S104, if there is a possibility of deceleration of the preceding vehicle, the processing proceeds to the step S109. If there is no possibility of deceleration, the processing proceeds to the step S106.

In the step S106, it is determined whether the driver is paying attention to the front of the own vehicle or not. If the driver is paying attention to the front, the processing proceeds to the step S107. Otherwise, the processing proceeds to the step S108.

In the step S107, the timing to issue the warning is set to the first warning timing T1.

In the step S108, the timing to issue the warning is set to the second warning timing T2.

In the step S109, it is determined whether the driver is paying attention to the front of the own vehicle or not. If the driver is paying attention to the front, the processing proceeds to the step S110. Otherwise, the processing proceeds to the step S111.

In the step S110, the timing to issue the warning is set to the third warning timing T3.

In the step S111, the timing to issue the warning is set to the fourth warning timing T4.

In the step S112, the warning is issued at the third warning timing T3 or the fourth warning timing T4.

In the step S113, the warning is issued at the first warning timing T1 or the second warning timing T2.

Moving to the flowchart of Fig. 4, in the step S201, it is determined whether the hazard lamps of the preceding are flashing or not. If the hazard lamps are flashing, it is determined that the preceding vehicle has possibility of deceleration, and the processing proceeds to the step S202. If the hazard lamps are not flashing, it is determined that there is no possibility of deceleration, and the processing proceeds to the step S204.

In the step S202, it is determined whether the detection of the preceding vehicle is attributable to interruption by the preceding vehicle or not. If the detection is attributable to the interruption, the processing proceeds to the step S204. Otherwise, the processing proceeds to the step S203.

In the step S203, it is determined that the preceding vehicle has a possibility of deceleration.

In the step S204, it is determined that there is no possibility of deceleration of the preceding vehicle.

### (Advantages and Effects)

Hereinbelow, the advantages and effects to be obtained by the present embodiment will be described.

In the present embodiment, the preceding vehicle traveling in front of the own vehicle is detected as an obstacle, and it is determined whether there is a possibility that the own vehicle may collide with the preceding vehicle or not. If there is a possibility of collision, the warning is issued to make the driver aware of the possibility. This warning is issued in different modes depending on the driver's attention to the front, specifically, whether or not the driver is paying attention to the front, i.e., looking forward or not. If the driver is paying attention to the front, the warning is issued in the first mode. If the driver is not paying attention to the front, the warning is issued in the second mode to prompt the driver to recognize the possibility of collision earlier than the first mode.

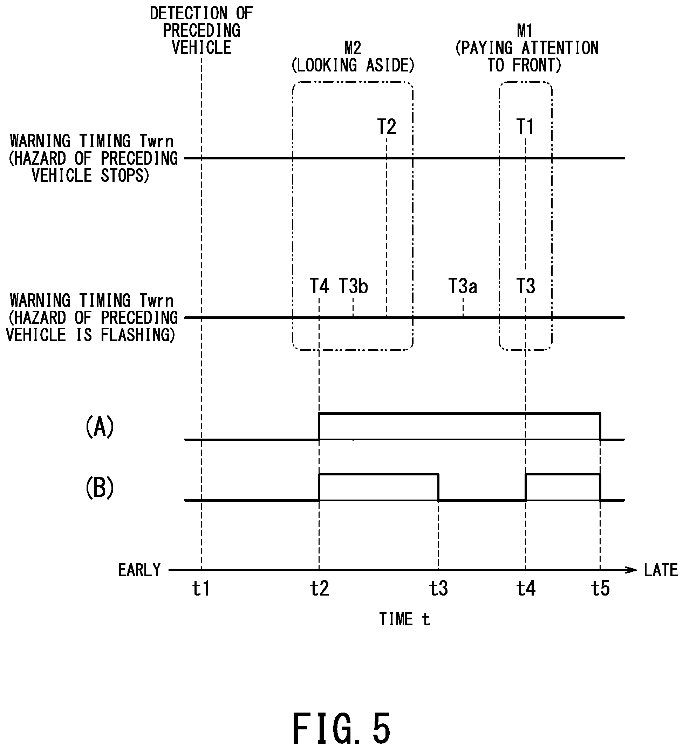

Fig. 5 is a timing chart for time-sequentially illustrating the warning timings T1 to T4 to be set by the collision warning control according to the present embodiment under the assumption that the preceding vehicle is detected at a time t1, and shows relative temporal order of the first to fourth warning timings T1 to T4 after the time t1.

In the present embodiment, under the situation where there is a possibility of collision between the own vehicle and the preceding vehicle, if the driver is paying attention to the front, the warning is issued in the first mode M1. Under the first mode M1, the timing to issue the warning is set to the basic warning timing (i.e., first warning timing T1) determined from the collision prediction time Tcol.

Conversely, if the driver is not paying attention to the front, the warning is issued in the second mode M2, and the warning timing is set to the second warning timing T2, which is earlier than the first warning timing T1.

In this manner, if the driver fails to pay attention to the front and is paying attention to the front, the driver can be expected to take an evacuation action such as depressing the brake pedal, and thus, the warning is issued in the normal first mode M1. Conversely, if the driver is not paying attention to the front, such as looking away from the front, the warning is issued in the second mode M2 to prompt the driver to recognize the possibility of collision at an early stage.

Consequently, the warning can be appropriately issued depending on the state of the driver, such an appropriate setting of the warning timing can reduce the inconvenience that the driver feels in the case of an unnecessarily early warning, and can improve safety without a negative effect of excessively compromising comfort. In other words, both comfort and safety can be achieved.

Further, in the present embodiment, if there is a possibility of deceleration of the preceding vehicle, the warning is issued at an earlier timing than in the case where there is no possibility of deceleration, which can prompt the driver to recognize the possibility of collision at an earlier timing. If there is a possibility of deceleration of the preceding vehicle, the timing to be advanced may be the warning timing in the first mode M1 (i.e., third warning timing T3) or the warning timing in the second mode M2 (i.e., fourth warning timing T4). Both the third and fourth warning timings T3 and T4 can be advanced together.

Under the situation where there is a possibility of deceleration of the preceding vehicle, if the driver recognizes the situation of the preceding vehicle by paying attention to the front, the driver can immediately take an evacuation action after the recognition, and thus, enough time for taking the necessary evacuation action can be secured even in the case of a relatively late warning timing.

Fig. 5 shows the variable third warning timings including: a warning timing T3b which is sufficiently earlier than the first warning timing T1 (i.e., than in the case where there is no possibility of deceleration of the preceding vehicle), a relatively late warning timing T3a, and the same warning timing T3 as the case where there is no possibility of deceleration of the preceding vehicle. The third warning timing can be appropriately selected from these timings T3, T3a, and T3b.

In the following, the third warning timing is assumed to be set to the warning timing T3a that is earlier than the first warning timing T1 and later than the second warning timing T2.

If there is a possibility of deceleration of the preceding vehicle, advancing the warning timing in the first mode M1 (to the third warning timing T3a) can prompt the driver, who is unaware of the possibility of deceleration of the preceding vehicle despite his/her attention to the front, to recognize the possibility of the collision at an earlier timing and can secure the time necessary for taking an evacuation action.

If there is a possibility of deceleration of the preceding vehicle, advancing the warning timing in the second mode M2 (to the fourth warning timing T4) can issue the warning at an earlier timing to the driver who is not paying attention to the front despite the situation of increasing possibility of collision with the preceding vehicle, and can prompt the driver to quickly recognize the situation of imminent collision.

In Fig. 5, the operation pattern A illustrates one of possible operation patterns of the warning light 141 or the alarm 142 if there is a possibility of collision between the own vehicle and the preceding vehicle under the situation where there is a possibility of deceleration of the preceding vehicle.

In the present embodiment, after detection of the preceding vehicle at the time t1, if the driver is not paying attention to the front around the time at which it is determined that there is a possibility of collision between the own vehicle and the preceding vehicle, the warning timing in the second mode M2 is advanced, and the warning is issued at the fourth warning timing T4 (at the time t2). The warning is issued by lighting the warning light 141 or sounding the alarm 142. Thereafter, if the possibility of collision with the preceding vehicle is eliminated by, for example, securing a sufficiently long collision prediction time Tcol for the preceding vehicle, the warning is stopped (at the time t5).

If the possibility of collision is not resolved despite the execution of the warning, at the time at which the braking time becomes longer than the collision prediction time Tcol, the controller 11 activates an automatic evacuation operation by, for example, actuating the brake actuator 16 to forcibly apply the brake.

In addition to the above-described control, the configuration of the present embodiment can appropriately determine whether there is a possibility of deceleration of the preceding vehicle or not on the basis of the operating status of the hazard lamps of the preceding vehicle. For example, if the hazard lamps of the preceding vehicle are flashing, it can be determined that the preceding vehicle is likely to decelerate and there is a possibility of deceleration.

In the case where flashing of the hazard lamps of the preceding vehicle is due to the preceding vehicle interrupting in front of the own vehicle, the flashing of the hazard lamps is presumed to be a so-called "thank-you hazard" for the own vehicle that has given way to the preceding vehicle. Thus, when the operating status of the hazard lamps in such a case is excluded from the indexes (determination parameters) for determining the possibility of deceleration of the preceding vehicle, this exclusion can avoid a situation where the warning timing is unnecessarily advanced and the driver is inconvenienced.

Further, the attention state of the driver to the front can be appropriately determined on the basis of the driver's line of sight, and thereby, it can be more reliably determined whether the driver recognizes the preceding vehicle or not.

### (Other Embodiments)

Other embodiments of the present invention will be described below.

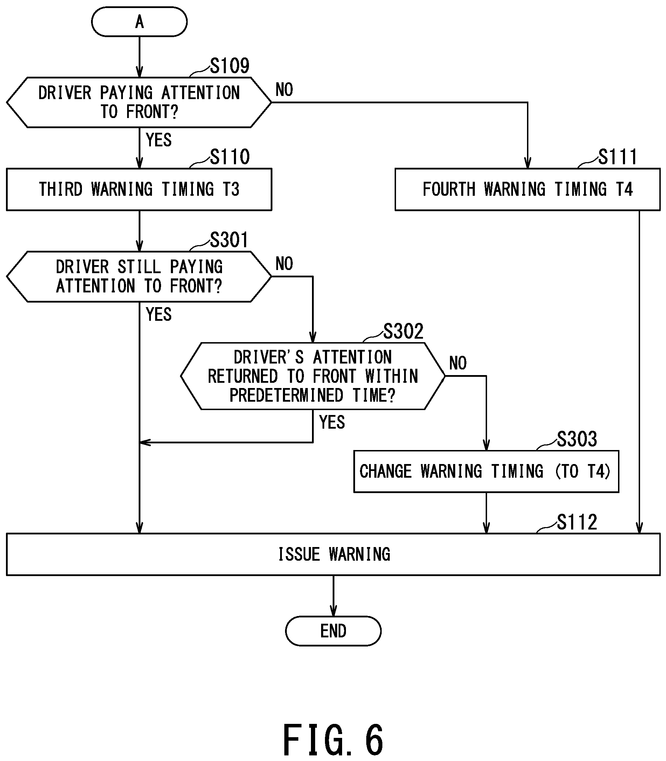

Fig. 6 is a flowchart illustrating details of part of the collision warning control (third warning-timing setting processing) according to another embodiment of the present invention. In Fig. 6 and Figs. 7 and 8 described below, each step of performing the processing similar to that in the flowchart of Fig. 3 is denoted as the same reference sign as in Fig. 3, and duplicate description of such processing is omitted.

The processing shown in Fig. 6 is executed in place of the processing shown by the two-dot chain line frame A in Fig. **3****.**

After the warning timing (i.e., third warning timing T3a) in the first mode M1 is set on the basis of the determination that the hazard lamps of the preceding vehicle are flashing and there is a possibility of deceleration of the preceding vehicle (in the step S105 of Fig. 3), if the driver's attention is diverted from the front by the time of issuing the warning but this is only a temporary action, the configuration of this embodiment avoids a situation where the warning timing is advanced only because of the driver's inattention to the front.

After setting the warning timing to the third warning timing T3a in the step S110, in the next step S301, it is determined whether the driver's attention is still directed toward the front or not. If the driver's attention is directed toward the front, the processing proceeds to the step S112. If the driver's attention is diverted from the front and is not directed toward the front, the processing proceeds to the step S302.

In the step S302, after determining that the driver's attention has diverted from the front, it is determined whether the driver's attention is returned to the front by the time at which a predetermined time elapses from the determination timing or not. If the driver's attention is returned to the front, the processing proceeds to the step S112. If the driver's attention is not yet returned, the processing proceeds to the step S303.

In the step S303, the timing to issue the warning is changed to the fourth warning timing T4, and then the processing proceeds to the step S112.

Under the situation where the preceding vehicle is flashing its hazard lamps and there is a high possibility of collision with the own vehicle due to deceleration of the preceding vehicle, if the determination affirming the driver's inattention to the front is only caused from temporarily distracted attention of the driver from the front, the configuration of this embodiment can avoid a situation where the warning timing is quickly changed and advanced due to this temporary action to inconvenience the driver despite the fact that the attention of the driver has been returned to the front.

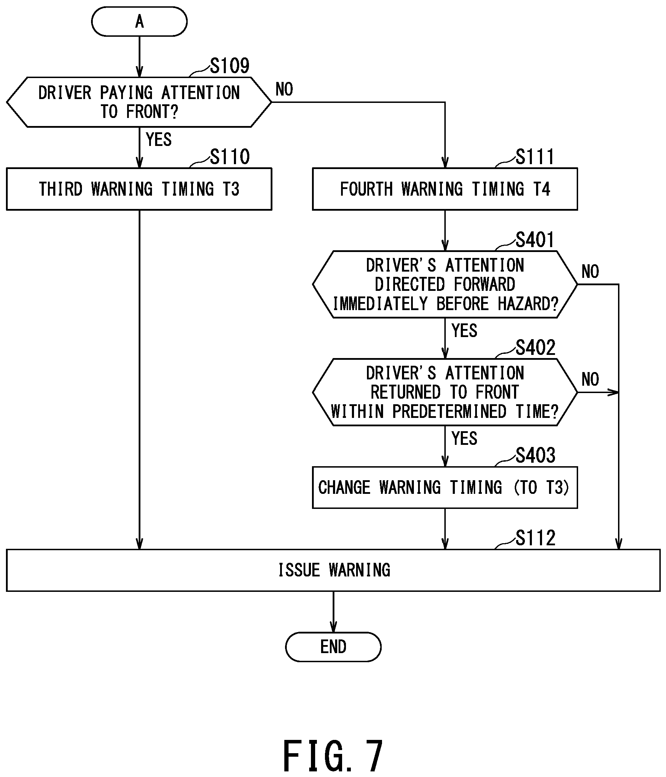

Fig. 7 is a flowchart illustrating details of part of the collision warning control (fourth warning-timing setting processing) according to still another embodiment of the present invention.

The processing shown in Fig. 7 is also executed in place of the processing shown by the two-dot chain line frame A in Fig. 3.

In the present embodiment, if the warning timing in the second mode M2 (i.e., the fourth warning timing T4) is set on the basis of the determination that the hazard lamps of the preceding vehicle are flashing and there is a possibility of deceleration of the preceding vehicle (in the step S105 of Fig. 3), the warning timing is changed to the third warning timing T3 on both conditions that: the driver's attention is directed toward the front immediately before recognition of flashing of the hazard lamps; and the driver's attention is returned to the front within a predetermined period of time after recognizing the hazard.

After setting the warning timing to the fourth warning timing T4 (in the step S111), in the next step S401, it is determined whether the driver's attention is directed toward the front immediately before recognition of flashing of the hazard lamps. If the driver's attention is directed toward the front immediately before the recognition, the processing proceeds to step the S402. Otherwise, the processing proceeds to the step S112.

In the step S402, it is determined whether the driver's attention is returned to the front by the time at which a predetermined period of time elapses from recognition of the hazard or not. If the driver's attention is returned, the processing proceeds to the step S403. Otherwise, the processing proceeds to the step S112.

In the step S403, the timing to issue the warning is changed to the third warning timing T3, and then the processing proceeds to the step S112.

Under the situation where the preceding vehicle is flashing its hazard lamps and decelerating and there is a high possibility of collision with the own vehicle, if the warning timing is once advanced to the fourth warning timing T4 on the basis of the original determination affirming the driver's inattention to the front but the original determination is due to temporarily distracted attention of the driver from the front, the configuration of this embodiment can avoid a situation where the warning timing remains advanced due to this temporary action so as to inconvenience the driver despite returned attention of the driver to the front.

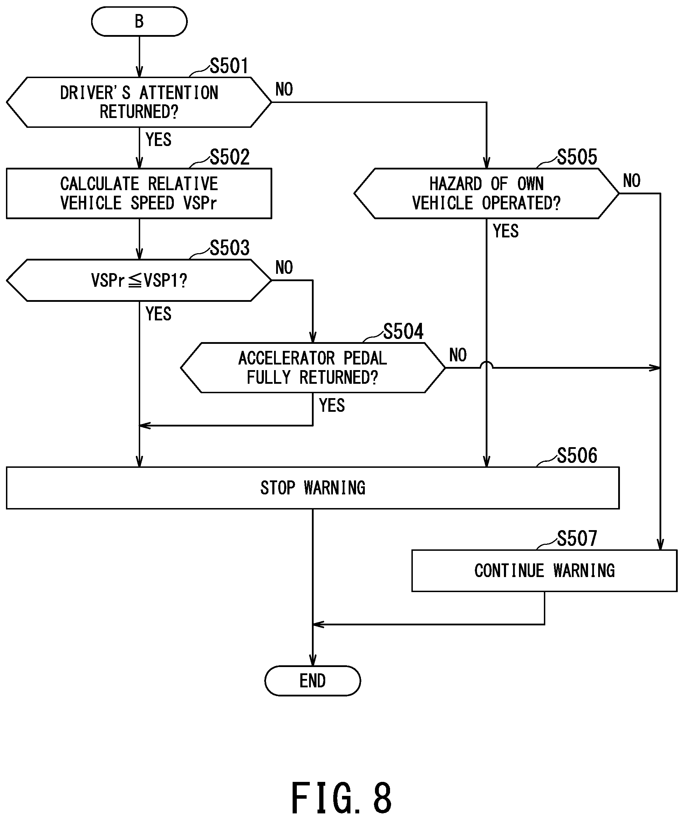

Fig. 8 is a flowchart illustrating details of part of the collision warning control (warning stop processing) according to still another embodiment of the present invention.

The processing shown in Fig. 8 is executed in place of the processing shown by the two-dot chain line frame B in Fig. 3.

In the present embodiment, after issuing the warning at an early timing such as the third warning timing T3a and the fourth warning timing T4 because of affirmation of the possibility of deceleration of the preceding vehicle, the warning is stopped if it is affirmed that the possibility of collision with the preceding vehicle is sufficiently low or the possibility of collision has sufficiently decreased, and the warning is also stopped if it is affirmed that the driver is aware of the possibility of collision with the preceding vehicle, such as the case where the driver has taken an evacuation action for the possible collision.

In the step S501, it is determined whether the driver is paying attention to the front or not. If the driver is paying attention to the front, the processing proceeds to the step S502. Otherwise, the processing proceeds to the step S505.

In the step S502, the relative vehicle speed VSPr of the own vehicle with respect to the preceding vehicle is calculated.

In the step S503, it is determined whether the relative vehicle speed VSPr of the own vehicle is equal to or lower than the predetermined vehicle speed VSP1. If the relative vehicle speed VSPr is equal to or lower than the predetermined vehicle speed VSP1, the processing proceeds to the step S506. If the relative vehicle speed VSPr is higher than the predetermined vehicle speed VSP1, the processing proceeds to the step S504.

In the step S504, it is determined whether the accelerator pedal is fully returned or not. If the driver is not applying any force to the accelerator pedal and the accelerator pedal is fully returned, the processing proceeds to the step S506. If the accelerator pedal is not fully returned, the processing proceeds to the step S507.

In the step S505, it is determined whether the hazard lamps of the own vehicle are flashing or not. If the hazard lamps are flashing, the processing proceeds to the step S506. Otherwise, the processing proceeds to the step S507.

In the step S506, the warning is stopped.

In the step S507, the warning is continued.

After issuing the warning at an early timing such as the third and fourth warning timings T3a and T4 because of affirmation of the possibility of deceleration of the preceding vehicle, if the possibility of collision with the preceding vehicle becomes low (steps S503 and S504), such as the case where the relative vehicle speed VSPr of the own vehicle decreases or the case where the driver takes his foot off the accelerator pedal, the warning is stopped on condition that the driver's attention is directed to the front or the driver's attention distracted from the front returns to the front (step S501). Stopping the warning under such a condition can avoid a situation where the warning is unnecessarily continued to excessively inconvenience the driver despite the circumstance where the possibility of collision with the preceding vehicle is sufficiently low and the driver is aware of the state of the preceding vehicle. The operation of fully returning or releasing the accelerator pedal by the driver corresponds to a "warning stop operation" by the driver.

Even if the driver's attention is not directed to the front after issue of the warning at an early timing, in the case where the hazard lamps of the own vehicle begin to flash, it is presumed that the reason why the driver's attention is distracted from the front is because the driver is operating the hazard lamps of the own vehicle, and it is also presumed that the driver is aware of the situation regarding the preceding vehicle. Thus, stopping the warning in such a case can avoid a situation where the warning continues unnecessarily.

In Fig. 5, the operation pattern B illustrates another operation pattern of the warning light 141 or the alarm 142 when there is a possibility of collision between the own vehicle and the preceding vehicle under a situation where there is a possibility of deceleration of the preceding vehicle.

In the present embodiment, after detection of the preceding vehicle (at the time t1), if the driver is not paying attention to the front despite a possibility of deceleration of the preceding vehicle around the time at which the possibility of collision between the own vehicle and the preceding vehicle is affirmed, the warning timing in the second mode M2 is advanced such that the warning is issued at the fourth warning timing T4 (at the time t2). Thereafter, for example, if the driver returns his attention to the front and takes his foot off the accelerator pedal to decelerate the vehicle (at the time t3), it is determined that the situation has changed to sufficiently decrease the possibility of collision with the preceding vehicle, and accordingly, the warning is stopped on the basis of this determination.

Afterward, if the possibility of collision is not resolved by the normal first warning timing T1, the warning may be issued again at the arrival of the first warning timing T1 (at the time t4).

In the present embodiment, both the warning to be issued at the fourth warning timing T4 and the warning to be issued at the first warning timing T1 are performed by causing the same warning light 141 to output the same display or causing the same alarm 142 to output the same sound so as to make the driver aware of the possibility of collision. These warnings are not limited to the above-described aspect, and can be implemented depending on their characteristics.

For example, the warning to be issued at the fourth warning timing T4 is configured as a hazard warning for making the driver aware of flashing of the hazard lamps of the preceding vehicle, the warning to be issued at the first warning timing T1 is positioned as a front collision warning for making the driver aware of the possibility of collision with the preceding vehicle, and both warnings are differentiated from each other in terms of display mode or alarm mode. For example, the front collision warning may be displayed more conspicuously than the hazard warning or the front collision warning may be issued with louder sound than the hazard warning.

In the above description, in order to prompt the driver to recognize the possibility of collision with the preceding vehicle at an early stage, the warning timing is advanced if the driver is not paying attention to the front of the own vehicle. However, the method for prompting the driver to recognize the situation is not limited to the above-described aspect. For example, in the case of a visual warning by using the warning light 141 and/or another component, the display may be more conspicuous by changing the color or brightness of the display. In the case of an audible warning by using the alarm 142 and/or another component, the volume of the alarm may be increased or the tone or sound pattern of the alarm may be changed.

The attention state of the driver can be determined not only from the driver's line of sight but also from the direction of the driver's head.

Furthermore, the obstacles to be avoided from colliding with the own vehicle are not limited to the preceding vehicle or other vehicles but may also be a moving obstacle excluding vehicles or another obstacle that does not move autonomously, such as a road obstacle.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims define the scope of protection.

### REFERENCE SIGNS LIST

- 1: vehicular driving support apparatus
- 11: controller
- 12: external sensor
- 121: front camera
- 122: front millimeter-wave radar
- 13: in-vehicle camera
- 14: instrument panel
- 141: warning light
- 142: alarm
- 151: accelerator sensor
- 152: brake sensor
- 16: brake actuator

## Claims

1. A vehicular driving support apparatus (1) comprising:
an obstacle detection unit (11: 111) configured to detect an obstacle existing in front of an own vehicle;
a collision determination unit (11: 117) configured to determine whether there is a possibility of collision between the own vehicle and the obstacle detected by the obstacle detection unit (11: 111) or not;
a warning execution unit (11: 118) configured to issue a warning to a driver to prompt the driver to recognize the possibility of collision when the collision determination unit (11: 117) determines that there is the possibility of collision; and
a driver monitoring unit (11: 114) configured to determine an attention state of the driver to the front of the own vehicle,
wherein the warning execution unit (11: 118) is configured to:
change a mode of issuing the warning depending on a determination result by the driver monitoring unit (11: 114);
issue the warning in a first mode if the driver is paying attention to the front; and
issue the warning in a second mode if the driver is not paying attention to the front, the second mode being a mode that issues the warning at an earlier timing than in the first mode, and
wherein, the warning execution unit (11: 118) is further configured to change the timing to issue the warning after elapse of a predetermined period of time from a time at which the driver monitoring unit (11: 114) determines that the driver is not paying attention to the front, when attention of the driver to the front is distracted after the collision determination unit (11: 117) determines that there is a possibility of collision.

2. The vehicular driving support apparatus (1) according to claim 1, further comprising a preceding-vehicle deceleration determination unit (11: 113) configured to determine whether there is a possibility of deceleration of a preceding vehicle that travels in front of the own vehicle, wherein:
the object is the preceding vehicle; and
the warning execution unit (11: 118) is configured to
differentiate the timing to issue the warning depending on whether there is a possibility of deceleration of the preceding vehicle or not, and
issue the warning in at least one of the first mode or the second mode, at an earlier timing when there is the possibility of deceleration of the preceding vehicle than in a case where the possibility of deceleration is denied.

3. The vehicular driving support apparatus (1) according to claim 2, wherein the preceding-vehicle deceleration determination unit (11: 113) is configured to determine whether there is the possibility of deceleration of the preceding vehicle or not, based on a predetermined determination parameter including at least one of:
an operating status of a hazard lamp of the preceding vehicle;
a traveling state of a pre-preceding vehicle that travels in front of the preceding vehicle; or
an inter-vehicular distance between the preceding vehicle and the pre-preceding vehicle.

4. The vehicular driving support apparatus (1) according to claim 3, further comprising a preceding-vehicle interruption determination unit (11: 112) configured to determine whether detection of the preceding vehicle by the obstacle detection unit (11: 111) is due to interruption by the preceding vehicle or not,
wherein the preceding-vehicle deceleration determination unit (11: 113) is configured to determine whether there is the possibility of deceleration of the preceding vehicle or not, based on the determination parameter except the operating status of the hazard lamp for the preceding vehicle detected due to the interruption.

5. The vehicular driving support apparatus (1) according to any one of claim 2 to claim 4, wherein:
when a relative vehicle speed of the own vehicle with respect to the preceding vehicle becomes low after the warning execution unit (11: 118) issues the warning at an earlier timing than in a case of no possibility of deceleration of the preceding vehicle under an affirmed possibility of the deceleration, the warning execution unit (11: 118) stops the warning in response to determination by the driver monitoring unit (11: 114) that the driver is paying attention to the front; and
when the relative vehicle speed becomes high after the warning execution unit (11: 118) issues the warning at an earlier timing than in a case of no possibility of the deceleration under the affirmed possibility of the deceleration, the warning execution unit (11: 118) stops the warning in response to a predetermined warning stop operation by the driver.

6. The vehicular driving support apparatus (1) according to any one of claim 2 to claim 5, wherein:
the preceding-vehicle deceleration determination unit (11: 113) is configured to determine the possibility of deceleration of the preceding vehicle based on the operating status of the hazard lamp of the preceding vehicle; and
the warning execution unit (11: 118) is configured to issue the warning at an earlier timing than in a case of no possibility of deceleration and then stop the warning in response to operation on the hazard lamp of the own vehicle, when the possibility of deceleration of the preceding vehicle is affirmed based on the operating status of the hazard lamp.

7. The vehicular driving support apparatus (1) according to any one of claim 1 to claim 6, wherein the driver monitoring unit (11: 114) is configured to determine the attention state of the driver based on a driver's line of sight.

## Patentansprüche

1. Fahrzeug-Fahrunterstützungsvorrichtung (1), umfassend:
eine Hindernis-Detektionseinheit (11: 111), welche dazu eingerichtet ist, ein Hindernis zu detektieren, welches vor einem eigenen Fahrzeug vorliegt;
eine Kollision-Bestimmungseinheit (11: 117), welche dazu eingerichtet ist, zu bestimmen, ob eine Möglichkeit einer Kollision zwischen dem eigenen Fahrzeug und dem Hindernis besteht, welches von der Hindernis-Detektionseinheit (11: 111) detektiert wird, oder nicht;
eine Warnung-Ausführungseinheit (11: 118), welche dazu eingerichtet ist, eine Warnung zu einem Fahrer auszugeben, um den Fahrer zu veranlassen, die Möglichkeit einer Kollision zu erkennen, wenn die Kollision-Bestimmungseinheit (11: 117) bestimmt, dass die Möglichkeit einer Kollision besteht; und
eine Fahrer-Überwachungseinheit (11: 114), welche dazu eingerichtet ist, einen Aufmerksamkeitszustand des Fahrers zu der Vorderseite des eigenen Fahrzeugs zu bestimmen,
wobei die Warnung-Ausführungseinheit (11: 118) dazu eingerichtet ist:
einen Modus eines Ausgebens der Warnung abhängig von einem Bestimmungsergebnis durch die Fahrer-Überwachungseinheit (11: 114) zu ändern; die Warnung in einem ersten Modus auszugeben, wenn der Fahrer zu der Vorderseite Aufmerksamkeit zollt; und
die Warnung in einem zweiten Modus auszugeben, wenn der Fahrer zu der Vorderseite keine Aufmerksamkeit zollt, wobei der zweite Modus ein Modus ist, welcher die Warnung zu einer früheren Zeit ausgibt als in dem ersten Modus, und
wobei die Warnung-Ausführungseinheit (11: 118) ferner dazu eingerichtet ist, die Zeit zum Ausgeben der Warnung nach einem Verstreichen einer vorbestimmten Zeitperiode von einer Zeit zu ändern, zu welcher die Fahrer-Überwachungseinheit (11: 114) bestimmt, dass der Fahrer zu der Vorderseite keine Aufmerksamkeit zollt, wenn die Aufmerksamkeit des Fahrers zu der Vorderseite abgelenkt ist, nachdem die Kollision-Bestimmungseinheit (11: 117) bestimmt, dass eine Möglichkeit einer Kollision besteht.

2. Fahrzeug-Fahrunterstützungsvorrichtung (1) nach Anspruch 1, ferner umfassend eine Bestimmungseinheit für eine Verzögerung eines vorausfahrenden Fahrzeugs (11: 113), welche dazu eingerichtet ist, zu bestimmen, ob eine Möglichkeit einer Verzögerung eines vorausfahrenden Fahrzeugs besteht, welches sich vor dem eigenen Fahrzeug fortbewegt, wobei:
das Objekt das vorausfahrende Fahrzeug ist; und
die Warnung-Ausführungseinheit (11: 118) dazu eingerichtet ist,
die Zeit zu unterscheiden, um die Warnung auszugeben, abhängig davon, ob eine Möglichkeit einer Verzögerung des vorausfahrenden Fahrzeugs besteht oder nicht, und
die Warnung in wenigstens einem aus dem ersten Modus oder dem zweiten Modus zu einer früheren Zeit auszugeben, wenn die Möglichkeit einer Verzögerung des vorausfahrenden Fahrzeugs besteht, als in einem Fall, in welchem die Möglichkeit einer Verzögerung verneint wird.

3. Fahrzeug-Fahrunterstützungsvorrichtung (1) nach Anspruch 2, wobei die Bestimmungseinheit für eine Verzögerung des vorausfahrenden Fahrzeugs (11: 113) dazu eingerichtet ist, zu bestimmen, ob die Möglichkeit einer Verzögerung des vorausfahrenden Fahrzeugs besteht oder nicht, auf Grundlage eines vorbestimmten Bestimmungsparameters, welcher wenigstens eines umfasst aus:
einem Betriebszustand einer Warnlampe des vorausfahrenden Fahrzeugs;
einem Fortbewegungszustand eines vor-vorausfahrenden Fahrzeugs, welches sich vor dem vorausfahrenden Fahrzeug fortbewegt; oder
einem Zwischenfahrzeug-Abstand zwischen dem vorausfahrenden Fahrzeug und dem vor-vorausfahrenden Fahrzeug.

4. Fahrzeug-Fahrunterstützungsvorrichtung (1) nach Anspruch 3, ferner umfassend eine Störung-Bestimmungseinheit für das vorausfahrende Fahrzeug (11: 112), welche dazu eingerichtet ist, zu bestimmen, ob eine Detektion des vorausfahrenden Fahrzeugs durch die Hindernis-Detektionseinheit (11: 111) aufgrund einer Störung durch das vorausfahrende Fahrzeug ist oder nicht, wobei die Bestimmungseinheit für eine Verzögerung des vorausfahrenden Fahrzeugs (11: 113) dazu eingerichtet ist, zu bestimmen, ob die Möglichkeit einer Verzögerung des vorausfahrenden Fahrzeugs besteht oder nicht, auf Grundlage des Bestimmungsparameters, ausgenommen den Betriebszustand der Warnlampe für das vorausfahrende Fahrzeug, welches aufgrund der Störung detektiert wird.

5. Fahrzeug-Fahrunterstützungsvorrichtung (1) nach einem aus Anspruch 2 bis Anspruch 4, wobei:
wenn eine relative Fahrzeuggeschwindigkeit des eigenen Fahrzeugs bezüglich des vorausfahrenden Fahrzeugs niedrig wird, nachdem die Warnung-Ausführungseinheit (11: 118) die Warnung bei einer früheren Zeit ausgibt als in einem Fall, dass keine Möglichkeit einer Verzögerung des vorausfahrenden Fahrzeugs besteht, unter einer bestätigten Möglichkeit der Verzögerung, die Warnung-Ausführungseinheit (11: 118) die Warnung in Reaktion auf eine Bestimmung durch die Fahrer-Überwachungseinheit (11: 114) stoppt, dass der Fahrer Aufmerksamkeit zu der Vorderseite zollt; und
wenn die relative Fahrzeuggeschwindigkeit hoch wird, nachdem die Warnung-Ausführungseinheit (11: 118) die Warnung bei einer früheren Zeit ausgibt als in einem Fall, das keine Möglichkeit der Verzögerung besteht, unter der bestätigten Möglichkeit der Verzögerung, die Warnung-Ausgebeeinheit (11: 118) die Warnung in Reaktion auf eine vorbestimmte Warnung-Stoppbetätigung durch den Fahrer stoppt.

6. Fahrzeug-Fahrunterstützungsvorrichtung (1) nach einem aus Anspruch 2 bis Anspruch 5, wobei:
die Bestimmungseinheit für eine Verzögerung des vorausfahrenden Fahrzeugs (11: 113) dazu eingerichtet ist, die Möglichkeit einer Verzögerung des vorausfahrenden Fahrzeugs auf Grundlage des Betriebsstatus der Warnlampe des vorausfahrenden Fahrzeugs zu bestimmen; und
die Warnung-Ausführungseinheit (11: 118) dazu eingerichtet ist, die Warnung zu einer früheren Zeit auszugeben als in einem Fall, dass keine Möglichkeit einer Verzögerung besteht, und dann die Warnung in Reaktion auf einen Betrieb der Warnlampe des eigenen Fahrzeugs zu stoppen, wenn die Möglichkeit einer Verzögerung des vorausfahrenden Fahrzeugs auf Grundlage des Betriebsstatus der Warnlampe bestätigt wird.

7. Fahrzeug-Fahrunterstützungsvorrichtung (1) nach einem aus Anspruch 1 bis Anspruch 6, wobei die Fahrer-Überwachungseinheit (11: 114) dazu eingerichtet ist, den Aufmerksamkeitszustand des Fahrers auf Grundlage einer Sichtlinie des Fahrers zu bestimmen.

## Revendications

1. Appareil d'assistance à la conduite de véhicule (1) comprenant :
une unité de détection d'obstacle (11 : 111) configurée pour détecter un obstacle existant devant un propre véhicule ;
une unité de détermination de collision (11 : 117) configurée pour déterminer s'il existe ou non un risque de collision entre le propre véhicule et l'obstacle détecté par l'unité de détection d'obstacle (11 : 111) ;
une unité d'exécution d'avertissement (11: 118) configurée pour émettre un avertissement à un conducteur pour inviter le conducteur à reconnaître le risque de collision lorsque l'unité de détermination de collision (11 : 117) détermine qu'il existe un risque de collision ; et
une unité de surveillance de conducteur (11 : 114) configurée pour déterminer un état d'attention du conducteur à l'avant du propre véhicule,
dans lequel l'unité d'exécution d'avertissement (11 : 118) est configurée pour :
modifier un mode d'émission de l'avertissement en fonction d'un résultat de détermination par l'unité de surveillance de conducteur (11 : 114) ;
émettre l'avertissement dans un premier mode si le conducteur est attentif à l'avant ; et
émettre l'avertissement dans un second mode si le conducteur n'est pas attentif à l'avant, le second mode étant un mode qui émet l'avertissement plus tôt que dans le premier mode, et
dans lequel l'unité d'exécution d'avertissement (11 : 118) est en outre configurée pour modifier la synchronisation pour émettre l'avertissement après l'expiration d'une période prédéterminée à partir d'un moment où l'unité de surveillance de conducteur (11 : 114) détermine que le conducteur n'est pas attentif à l'avant, lorsque l'attention du conducteur à l'avant est distraite après que l'unité de détermination de collision (11 : 117) détermine qu'il existe un risque de collision.

2. Appareil d'assistance à la conduite de véhicule (1) selon la revendication 1, comprenant en outre une unité de détermination de décélération de véhicule précédent (11 : 113) configurée pour déterminer s'il existe ou non un risque de décélération d'un véhicule précédent qui circule devant le propre véhicule, dans lequel :
l'objet est le véhicule précédent ; et
l'unité d'exécution d'avertissement (11 : 118) est configurée pour
différencier le moment d'émission de l'avertissement selon qu'il existe ou non un risque de décélération du véhicule précédent, et
émettre l'avertissement dans au moins un parmi le premier mode ou le second mode plus tôt lorsqu'il existe un risque de décélération du véhicule précédent par rapport à un cas où le risque de décélération est démenti.

3. Appareil d'assistance à la conduite de véhicule (1) selon la revendication 2, dans lequel l'unité de détermination de décélération de véhicule précédent (11 : 113) est configurée pour déterminer s'il existe ou non un risque de décélération du véhicule précédent sur la base d'un paramètre de détermination prédéterminé comportant au moins un parmi :
un état de fonctionnement d'un feu de détresse du véhicule précédent ;
un état de circulation d'un véhicule pré-précédent qui circule devant le véhicule précédent ; ou
une distance inter-véhicules entre le véhicule précédent et le véhicule pré-précédent.

4. Appareil d'assistance à la conduite de véhicule (1) selon la revendication 3, comprenant en outre une unité de détermination d'interruption de véhicule précédent (11 : 112) configurée pour déterminer si oui ou non la détection du véhicule précédent par l'unité de détection d'obstacle (11 : 111) est due à une interruption par le véhicule précédent ou non,
dans lequel l'unité de détermination de décélération de véhicule précédent (11 : 113) est configurée pour déterminer s'il existe ou non un risque de décélération du véhicule précédent, sur la base du paramètre de détermination, à l'exception de l'état de fonctionnement du feu de détresse pour le véhicule précédent détecté en raison de l'interruption.

5. Appareil d'assistance à la conduite de véhicule (1) selon l'une quelconque de la revendication 2 à la revendication 4, dans lequel :
lorsqu'une vitesse relative de véhicule du véhicule propre par rapport au véhicule précédent devient faible après que l'unité d'exécution d'avertissement (11 : 118) émet l'avertissement plus tôt qu'en cas d'absence de risque de décélération du véhicule précédent en cas de risque confirmé de décélération, l'unité d'exécution d'avertissement (11 : 118) arrête l'avertissement en réponse à la détermination par l'unité de surveillance du conducteur (11 : 114) que le conducteur est attentif à l'avant ; et
lorsque la vitesse relative de véhicule devient élevée après que l'unité d'exécution d'avertissement (11 : 118) émet l'avertissement plus tôt qu'en cas d'absence de risque de décélération en cas de risque affirmé de décélération, l'unité d'exécution d'avertissement (11 : 118) arrête l'avertissement en réponse à une opération d'arrêt d'avertissement prédéterminée par le conducteur.

6. Appareil d'assistance à la conduite de véhicule (1) selon l'une quelconque de la revendication 2 à la revendication 5, dans lequel :
l'unité de détermination de décélération de véhicule précédent (11 : 113) est configurée pour déterminer le risque de décélération du véhicule précédent sur la base de l'état de fonctionnement du feu de détresse du véhicule précédent ; et
l'unité d'exécution d'avertissement (11: 118) est configurée pour émettre l'avertissement plus tôt qu'en cas d'absence de risque de décélération et ensuite arrêter l'avertissement en réponse à une opération sur le feu de détresse du propre véhicule, lorsque le risque de décélération du véhicule précédent est confirmé sur la base de l'état de fonctionnement du feu de détresse.

7. Appareil d'assistance à la conduite de véhicule (1) selon l'une quelconque de la revendication 1 à la revendication 6, dans lequel l'unité de surveillance de conducteur (11 : 114) est configurée pour déterminer l'état d'attention du conducteur sur la base d'une ligne de visée de conducteur.
